# EUROPEAN PATENT APPLICATION

(11) **EP 4 711 216 A1**
(43) Date of publication of application: **18.03.2026**
(21) Application number: 24199625.5
(22) Date of filing: 11.09.2024
(51) Int. Cl.: B60T 8/171, B60T 8/172, B60T 13/66, B60T 13/74, B60T 17/22, B60T 8/88

(54) **FORCE DETERMINATION UNIT FOR DETERMINING A FORCE FEEDBACK, ELECTRO-MECHANICAL ACTUATOR ASSEMBLY AND METHOD FOR DETERMINING A FORCE FEEDBACK**

(71) Applicant: KB Intellectual Property GmbH & Co. KG, 82049 Pullach (DE)
(72) Inventor: SZABO, Gergely, 1125 Budapest (HU); KOKREHEL, Csaba, 1119 Budapest (HU)

(57) **Abstract**

The present invention relates to a force determination unit (40) for determining a force feedback representative of an actuating force of a brake actuator (20), comprising:
a force acquisition unit (41) configured to provide an acquired force signal (411) as a signal representing a measured actuating force, and
a force estimation unit (42) configured to provide an estimated force signal (421) as a signal representing an estimated actuating force.

## Description

The present invention relates to a force determination unit for determining a force feedback representative of an actuating force of a brake actuator, an electro-mechanical actuator assembly for actuating a brake actuator assembly comprising such force determination unit, a brake assembly for a vehicle comprising such electro-mechanical actuator assembly and a respective vehicle. The present invention further relates to a method for determining a force feedback representative of an actuating force of a brake actuator, a respective computer program product and a respective computer-readable storage medium.

An electro-mechanical brake actuator for a brake system requires a force sensor suitable for a stable and reliable closed-loop brake force control. A respective force feedback solution has to meet high-level safety such as ASIL D representing one of the safety integrity levels in automotive industry. Accordingly, the force sensor as such shall have an appropriate ASIL rating and/or additional monitoring and estimation mechanisms have to be developed with which the targeted safety level can be fulfilled. However, in a system environment not providing compressed air, such as fully electronic brake systems, already available, mostly pneumatic-based solutions cannot be implemented.

It is an object of the present invention to provide the ability determining a feedback force with a high safety integrity level, particularly with respect to electronic brake systems.

The object is solved by the subject-matter of the independent claims. Further aspects of the present invention are subject to the dependent claims.

According to the present invention, a force determination unit for determining a force feedback representative of an actuating force of a brake actuator comprises a force acquisition unit configured to provide an acquired force signal as a signal representing a measured actuating force, and a force estimation unit configured to provide an estimated force signal as a signal representing an estimated actuating force.

The force acquisition unit may comprise a force sensor or may be connected or connectable to a force sensor to provide the acquired force signal based on the measured actuating force. The force acquisition unit may be further configured to process a measured actuating force signal to be provided as acquired force signal. For example, the force acquisition unit may apply a filter or noise reduction procedure on the measured actuating force signals to generate the acquired force signal, e.g. in a more suitable way for control purposes based on the acquired force signal. Alternatively or in addition, the force acquisition unit may apply a plausibility check on the measured actuating force signal.

Since the force determination unit further comprises the force estimation unit, the force determination unit is capable of providing a redundant force signal to enhance the safety level of a force-based control. In other words, if one of the acquired force signal and the estimated signal is missing or faulty for any reason, a force-based control may still be executed based on the other force signal available.

In some embodiments, the force determination unit further comprises a force feedback unit configured to receive the acquired force signal and the estimated force signal to determine a force feedback signal as a signal representing the force feedback. The force feedback unit is further configured to determine the force feedback signal by selecting the acquired force signal as force feedback signal, if no estimated force signal is received or the acquired force signal is plausible, and by selecting the estimated force signal as force feedback signal, if no acquired force signal is received or the acquired force signal is implausible.

Accordingly, the force feedback unit determines the acquired force signal or the estimated force signal to be used as force feedback signal or on which the force feedback should be based on in the event of the selected force signal being further processed by the force feedback unit to generate the force feedback signal. Similar as addressed with respect to the force acquisition unit, the force feedback unit may process the selected force signals by applying a filter or noise reduction procedure.

In some applications, the acquired force signal may be prioritized for a subsequent force control. Accordingly, as long as the acquired force signal is available and plausible, the acquired force signal is determined as the force feedback signal or the signal the force feedback signal is based on. However, if the acquired force signal is not present or implausible, the estimated force signal is selected to provide the force feedback signal.

However, in applications, in which the estimated force signal may be prioritized, a principle vice versa to the above may be applied. In such contrary approach, the estimated signal is determined by the force feedback unit as to form base for the force feedback signal as long as it is available and plausible. If the estimated force signal is not present or implausible, the force feedback unit determines the acquired force signal as to form base for the force feedback signal.

The force feedback unit may comprise a respective determination routine to determine the plausibility of the acquired force signal and/or the estimated force signal. For example, by comparing the acquired force signal and/or the estimated force signal as representing an actuating force with actuating forces reasonably expectable. For example, if the represented actuating force is as high as it cannot be provided by the respective actuator, the respective force signal is determined as implausible. However, as previously stated, the plausibility check may alternatively or in addition be executed by the force acquisition unit.

In some embodiments, the force feedback unit is configured to determine the acquired force signal as plausible, if a difference between the acquired force signal and the estimated force signal is within a predetermined range.

In turn, if the difference between the acquired force signal and the estimated force signal exceeds the predetermined range, the acquired force is determined as implausible.

In some embodiments, the force feedback unit is configured to adapt the predetermined range dependent on a brake procedure.

For example, a brake procedure may be a ABS procedure with a critical force control. Accordingly, the predetermined range may be set narrow. In turn, during a soft braking at low speeds, the force control may be less critical and allows the predetermined range to be enhanced. In other words, the predetermined range may be adapted according to a required safety level, and the predetermined range may be set larger the more potential inaccuracies in the acquired force signal are acceptable without impeding sufficient safety.

In some embodiments, the force estimation unit is configured to estimate the actuating force based on at least one of a stroke sensor signal representing a stroke or position of an actuating member of an electro-mechanical actuator assembly, a motor position sensor signal representing a position of a rotor of a driving device of the electro-mechanical actuator assembly, a motor temperature sensor signal representing the temperature of the driving device of the electro-mechanical actuator assembly, a motor current sensor signal representing a motor current of the driving device of the electro-mechanical actuator assembly, and a control unit temperature signal representing a temperature of a control device of the electro-mechanical actuator assembly.

Some or all of the signals may already be available by sensors used for other purposes. Accordingly, the force estimation unit may also have to be connected to such sensors. Furthermore, some of the sensors may also already provide a sufficient safety level to provide a corresponding safety level for the force estimation unit in terms of the availability of required signal for generating the estimated force signal.

In some embodiments, the force estimation unit is configured to calculating the motor torque by at least one of the motor position sensor signal, the motor temperature sensor signal, and the motor current sensor signal, and to estimate the actuator force as by the calculated motor torque in dependence of the stroke sensor signal, preferably be a nonlinear function between the stroke or position of the actuating member represented by the stroke sensor signal and the calculated motor torque as input.

Preferably, the motor torque is calculated by using motor-related motor equations under consideration of the motor position represented by the motor position sensor signal, the motor temperature represented by the motor temperature sensor signal, and the motor current represented by the motor current sensor signal. However, if one of the sensors is faulty or not present at all, the force estimation unit may be capable of adapting the motor-related motor equations to calculate the motor torque with at least one of the available signals.

Further, the measured force can be input in the force estimator. The measurement with the combination results in a less noisy and more accurate signal. On the other hand, the estimation unit shall also decide whether the measured force is plausible or not. If not, the full estimation shall overtake the force feedback.

In a further aspect, the present invention relates to an electro-mechanical actuator assembly for actuating a brake actuator. The electro-mechanical actuator assembly comprises an actuating member for actuating the brake actuator, a driving device to move the actuating member for actuating the brake actuator, and a force determination unit as previously described. The electro-mechanical actuator assembly further comprises at least one of a force sensor connected at least to the force acquisition unit to supply a force sensor signal as input for providing an acquired force signal, a stroke sensor connected at least to the force estimation unit to supply a stroke sensor signal as input for providing an estimated force signal, a motor position sensor connected at least to the force estimation unit to supply a motor position sensor signal as input for providing an estimated force signal, a motor temperature sensor connected at least to the force estimation unit to supply a motor temperature sensor signal as input for providing an estimated force signal, a motor current sensor connected at least to the force estimation unit to supply a motor current sensor signal as input for providing an estimated force signal, and a ECU temperature sensor connected at least to the force estimation unit to supply a ECU temperature sensor signal as input for providing an estimated force signal.

For example, the force sensor to measure the actuating force may be arranged between a thrust bearing for an axially moving spindle nut or axially moving spindle of a spindle-spindle nut mechanism, depending on whether the nut or spindle is axially driven, and the housing in which the spindle-spindle nut mechanism is arranged. The stroke sensor may similarly be arranged in the vicinity of the axially moved spindle nut or spindle to detect a stroke or a position indicating the stroke. The motor position sensor may be arranged to detect a rotational position of a rotor of a motor or driving device, respectively. The motor temperature sensor may be integrated into the motor stator. The motor current sensor may be comprised by a control device to control the motor. The ECU temperature sensor may be integrated into an electronic control unit which may be the control device or comprised by the control device.

An exemplary electro-mechanical actuator assembly for actuating a brake actuator may comprise an actuation mechanism configured to convert a rotational driving movement into a translational driven movement in a direction of a first longitudinal axis, and a transfer mechanism operatively coupled to the actuation mechanism to receive and transfer the translational driven movement at least in the direction of the first longitudinal axis. The transfer mechanism comprises at least one pushing member having a pushing member pivot portion configured to allow a tilting movement of the pushing member about a pivot axis inclined to the first longitudinal axis.

For example, the pushing member may be a push rod, axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. A brake lever as the brake actuator may thereby be rotated about a pivot axis extending in a direction inclined, particularly substantially perpendicular, to the first longitudinal axis, but not intersecting the first longitudinal axis and thereby distanced therefrom. The brake actuator and the pushing member may each comprise an engaging interface configured to engage with each other such that the pushing member is engaged with the brake actuator during a braking movement. Since the brake actuator rotates about the pivot axis, the interface of the brake actuator moves along a curved trajectory. Accordingly, the pushing member in engagement with the brake actuator comprises a pushing member pivot portion to allow a tilting movement of the pushing member about a respective pivot axis inclined, particularly substantially perpendicular, to the first longitudinal axis. The pivot axis of the pushing member is preferably substantially in parallel to the pivot axis of the brake actuator. Here and in the following, the term "substantially" generally relates to tolerances in manufacturing and/or assembling as well as any other slight deviations that do not interfere with basic principles provided by respective configurations.

Due to the actuation mechanism configured to convert a rotational driving movement into a translational driven movement in the direction of the first longitudinal axis, and the transfer mechanism operatively coupled to the actuation mechanism to receive and transfer the translational driven movement at least in the direction of the first longitudinal axis, the actuation mechanism is capable of being retrofitted in a brake assembly when exchanging a linear drive with a rotary drive within a given brake actuator and/or brake configuration. Further the ability of the pushing member to provide a tilting movement allows to reduce loads on the pushing member, which may otherwise result in deformations or other damages of the pushing member or components subsequent thereof in a direction away from the brake actuator, and/or on the brake actuator.

The actuation mechanism may be a spindle-spindle nut mechanism, preferably a recirculating ball spindle mechanism. A spindle of the spindle-spindle nut mechanism extends along the first longitudinal axis and is rotationally supported about the first longitudinal axis while being axially fixed. Further, the spindle nut is configured to be axially moveable with respect to the first longitudinal axis while being rotationally fixed.

For example, the spindle-spindle nut mechanism is a recirculating ball-spindle based actuator, wherein the spindle is extending in the direction of the first longitudinal axis, preferably coaxially therewith, and is rotationally supported by at least one spindle bearing to allow a rotational movement of the spindle about the first longitudinal axis or an axis in parallel to the first longitudinal axis but keeping the spindle axially stationary with respect to the direction of the first longitudinal axis. However, in other embodiments, the spindle-spindle nut mechanism may be another actuation mechanism configured to convert a rotational driving movement into a translational driven movement in a direction of a first longitudinal axis, such as a threaded mechanism. The spindle nut starts moving axially with respect to the first longitudinal axis by the rotational movement of the spindle. To prevent the spindle nut from rotating together with the spindle and being rotationally stationary, the spindle nut may comprise at least one spindle support pin projecting radially with respect to the first longitudinal axis. The at least one pin may be received in a guiding groove of a housing, in which the spindle nut is received, or of another stationary component. The guiding groove extends in the direction of the axial movement of the spindle nut. By the axial movement of the spindle nut, the transfer mechanism is also moved in the axial direction.

The electro-mechanical actuator assembly may further comprise an electro-mechanical linear actuator configured and controlled to lock the spindle against a rotational movement.

For example, the electro-mechanical linear actuator may be configured to be moved against the spindle to lock or brake the spindle against a rotational movement by providing a form fit and/or force fit connection. However, in other embodiments, such locking may be alternatively or in addition provided by another locking mechanism such as a pneumatic locking mechanism. By locking the spindle against a rotational movement, a force acting on the spindle nut in the axial direction with respect to the first longitudinal axis does not cause the spindle nut or the spindle to move.

Alternatively, an electro-mechanical actuator assembly for actuating a brake actuator comprises an actuation mechanism configured to convert a rotational driving movement into a translational driven movement in a direction of a first longitudinal axis, and a pushing member operatively coupled to the actuation mechanism to receive and transfer the translational driven movement at least in the direction of the first longitudinal axis, wherein the actuation mechanism is a spindle-spindle nut mechanism, wherein a spindle nut of the actuation mechanism is rotationally supported about the first longitudinal axis while being axially fixed, and wherein a spindle of the actuation mechanism is configured to be axially moveable with respect to the first longitudinal axis while being rotationally fixed.

For example, the pushing member is axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. Since the spindle is not rotationally moveable but axially moveable by the rotation of the spindle nut to actuate the brake actuator via the pushing member, constructional and/or dynamic requirements with respect to the spindle may be reduced.

The term "operatively connected" or "operatively coupled" refers to a direct or indirect connection or coupling. For example, an indirect connection or coupling may comprise at least one intermediate component, e.g. to bridge distances and/or to provide flexible interfaces, arranged between the members to be operatively connected coupled. Accordingly, any described coupling of the pushing member to the spindle is also transferable to a coupling of the pushing member to at least one intermediate component, which is in turn operatively coupled to the spindle. For example, with respect to the pushing member being operatively connected to the spindle, the pushing member may be directly coupled to the spindle by a fixing member, such as a fixing O-ring, or indirectly coupled to the spindle by being coupled to the at least one intermediate component by such fixing member.

The spindle nut may be rotationally driven to move the spindle axially, the spindle-spindle nut mechanism may also comprise a ball screw. For example, the spindle-spindle nut mechanism is a recirculating ball-spindle based actuator, wherein the spindle is extending in the direction of the first longitudinal axis, preferably coaxially therewith, and may be supported by the spindle nut for an axial movement of the spindle along the first longitudinal axis or an axis in parallel to the first longitudinal axis but keeping the spindle rotationally stationary with respect to the direction of the first longitudinal axis. The spindle starts moving axially with respect to the first longitudinal axis by the rotational movement of the spindle nut. To prevent the spindle from rotating together with the spindle nut and being rotationally stationary, the spindle may comprise at least one spindle support pin projecting radially with respect to the first longitudinal axis. The at least one pin may be received in a guiding groove of a housing, in which the spindle is received, or of another stationary component. The guiding groove extends in the direction of the axial movement of the spindle. By the axial movement of the spindle, the pushing is also moved in the axial direction. However, in other embodiments, the spindle-spindle nut mechanism may also be another actuation mechanism configured to convert a rotational driving movement into a translational driven movement in a direction of a first longitudinal axis, such as a threaded mechanism.

The electro-mechanical actuator assembly may further comprise an electro-mechanical linear actuator configured and controlled to lock the spindle nut against a rotational movement.

For example, the electro-mechanical linear actuator may be configured to be moved against the spindle nut to lock or brake the spindle nut against a rotational movement by providing a form fit and/or force fit connection. However, in other embodiments, such locking may be alternatively or in addition provided by another locking mechanism such as a pneumatic locking mechanism. By locking the spindle nut against a rotational movement, a force acting on the spindle in the axial direction with respect to the first longitudinal axis does not cause the spindle or the spindle nut to move.

With respect to the rotationally driven spindle nut, the spindle nut may be rotationally supported about the first longitudinal axis by at least one bearing arranged at a radial outer surface of the spindle nut.

Due to a braking operation with the pushing member being in engagement with the brake actuator, a force is applied on the pushing member and therefore other subsequent components operatively connected thereto. In particular, since the pushing member may be tilted or at least affected by forces in engagement with the brake actuator by the brake actuator being particularly moved on a curved trajectory, respective forces or force components, respectively, may act on the pushing member and, for example, the spindle and subsequently the spindle nut. Accordingly, the at least one bearing arranged at a radial outer surface, i.e. extending at least partially around an outer radial circumference, of the spindle nut may absorb such forces while guiding the axial movement of the guiding device. The at least one bearing may therefore be supported radially inside a housing at least partially accommodating the spindle nut. Due to the force absorption by the at least one bearing, respective forces may not have sufficient influence to cause deformations or other damages.

For example, the spindle nut is rotationally supported about the first longitudinal axis by at least one spindle nut fixed bearing and at least one spindle nut loose bearing arranged at a radial outer surface of the spindle. Both bearings may be deep-grooved ball bearings, which are also capable of carrying axial forces. Preferably, the spindle nut fixing bearing is configured to carry the axial force transmitted from the pushing member. The at least one bearing, for example, the spindle nut fixing bearing, may also be a combination of more than one bearing, such as an axial thrust ball bearing and one further radial bearing of any kind. In other words, the at least one bearing is configured to take up the axial forces by being provided as a single bearing or a combination of bearings, which provide axial and radial force support.

With respect to the rotationally driven spindle nut, in the direction of the first longitudinal axis, an end portion of the spindle may comprise a spindle recess, preferably in a conical shape tapered from the opening of the spindle recess to the closed end of the spindle recess, configured to at least partially receive the pushing member, wherein the pushing member is preferably operatively connected to the spindle within the spindle recess.

Accordingly, the pushing member at least partially extends into the spindle to allow a more compact design in the direction of the first longitudinal axis. Due to the conical shape of the spindle recess, the spindle recess may provide a centering capability for the pushing member and/or may provide a predetermined tilting capability for the pushing member within the spindle, as described later.

With respect to the rotationally driven spindle nut, the spindle may be supported by the spindle nut and/or at least one bearing member over a predetermined support section in the direction of the first longitudinal axis, preferably a predetermined support section at least partially corresponding to a predetermined actuation movement of the spindle for an actuating a brake actuator, and wherein the spindle recess extends in the direction of the first longitudinal axis such that a bending force transmission from the pushing member to the spindle substantially occurs within the predetermined support section.

During a braking operation, the pushing member may transfer bending forces or a bending torque, respectively, on the spindle. By supporting the spindle by the spindle nut and/or at least one bearing member over the predetermined support section, a respective effect on the spindle may be reduced. In particular, the predetermined support section at least partially corresponding to a predetermined actuation movement of the spindle for an actuating a brake actuator allows to support the spindle over at least partially over normal brake operating procedures. The predetermined support section may specifically correspond to a predetermined actuation movement with expectable bending forces equal to or above a predetermined threshold.

In accordance with the above, the spindle recess extends in the direction of the first longitudinal axis such that a bending force transmission from the pushing member to the spindle substantially occurs within the predetermined support section, in which the spindle is sufficiently supported.

Further, with the pushing member further extending in the spindle, the deflection angle of the pushing member with respect to the first longitudinal axis for the same actuation of the brake actuator and therefore the bending forces are allowed to be decreased. In other words, the more the pushing member extends into the spindle, the less the deflection angle. For example, the pushing member may extend within the spindle recess at least beyond the pivot axis of the brake actuator in the direction away from the brake actuator in the direction of the first longitudinal axis. Alternatively or in addition, the length of the pushing member within the spindle recess is determined such that the pivot axis of the pushing member is located within the predetermined support section, for example, between two bearings axially arranged along the spindle nut, at least at a maximum stroke force or maximum actuator force, respectively, or at a respective force range exceeding a predetermined threshold acting from the pushing member on the spindle.

The spindle may be operatively connected to a driving device, preferably an electric motor, to be driven by the driving device directly or via at least one gear stage arranged between the driving device and the spindle.

Accordingly, the driving device, specifically a rotary driving device, drives the spindle to rotate to axially drive the spindle nut. The driving device may be directly or indirectly connected to the spindle. In this context but also in general, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected coupled. With respect to the spindle being operatively connected to the driving device, at least one gear stage may be arranged between the driving device and the spindle. The at least one gear stage may allow to convert a rotational speed of the driving device into a different rotational speed of the spindle. Preferably, the at least one gear stage is configured to lower the rotational speed of the spindle with respect to the rotational speed of the driving device. With the driving device being or at least comprising an electric motor, driving of the spindle can be implemented in an easy manner.

In the alternative embodiment with respect to the spindle nut being rotationally driven to move the spindle axially, the spindle nut is operatively connected to a driving device, preferably an electric motor, to be driven by the driving device directly or via at least one gear stage arranged between the driving device and the spindle nut.

Accordingly, the driving device, specifically a rotary driving device, drives the spindle nut to rotate to axially drive the spindle. The driving device may be directly or indirectly connected to the spindle nut. In this context but also in general, as previously stated, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected or coupled. With respect to the spindle nut being operatively connected to the driving device, at least one gear stage may be arranged between the driving device and the spindle nut. The at least one gear stage may allow to convert a rotational speed of the driving device into a different rotational speed of the spindle nut. Preferably, the at least one gear stage is configured to lower the rotational speed of the spindle nut with respect to the rotational speed of the driving device. With the driving device being or at least comprising an electric motor, driving of the spindle can be implemented in an easy manner.

The driving device may comprise a driving device shaft extending in a direction of a second longitudinal axis, preferably in parallel to the first longitudinal axis.

The second longitudinal axis may be coaxially aligned with the first longitudinal axis, for example in series with the spindle. However, due to spatial constraints for installation or to reduce the size of the electro-mechanical actuator assembly in the direction of the first longitudinal axis, the driving device shaft and therefore the second longitudinal axis may be arranged to extend in parallel to the first longitudinal axis. In such configuration the driving device shaft and the spindle may be operatively coupled via the at least one gear stage, wherein the at least one gear stage may only be provided to transfer the rotational movement of the driving device shaft to the spindle with the same rotational speed but may alternatively convert the rotational speed.

The driving device shaft may at least partially overlap the spindle in the direction of the second longitudinal axis.

By the driving device shaft and the spindle at least partially overlapping, the installation space can be reduced in the direction of the first longitudinal axis resulting in a compact design in such direction. For example, the first longitudinal axis and the second longitudinal axis are arranged in parallel to each other. Further, the driving device shaft and the spindle are arranged such that the shorter one of the driving device shaft or the spindle is not extending beyond the longer one of the driving device shaft or the spindle with respect to the first longitudinal axis or the second longitudinal axis, respectively. For the driving device shaft and the spindle being substantially equal in length with respect to the respective first and second longitudinal axis, preferably none of the driving device shaft and the spindle is extending beyond the other one. The first longitudinal axis and the second longitudinal axis may be arranged to extend in a horizontal plane or a vertical plane upon being installed.

The electro-mechanical actuator assembly may further comprise a locking unit, preferably an electro-mechanical linear actuator or a locking clutch, more preferably a bi-stable brake, configured and controlled to lock the driving device shaft against a rotational movement.

With respect to the spindle being rotationally driven, by locking the driving device shaft, any unintentional movement of the spindle may be prevented. In turn, any rotational movement of the spindle does not cause the driving device shaft operatively connected to the spindle to rotate, which may affect the driving device.

With respect to the spindle nut being rotationally driven, by locking the driving device shaft, any unintentional movement of the spindle nut may be prevented. In turn, any rotational movement of the spindle nut does not cause the driving device shaft operatively connected to the spindle nut to rotate, which may affect the driving device.

The locking unit is preferably configured to lock by a form fit connection.

Specifically, the locking unit is configured as a parking brake, specifically a parking brake clutch, coupled to the driving device shaft to lock the driving device rotation in a predetermined position. Preferably, the brake is pretensioned in the predetermined position, so that a parking brake function is realized.

The transfer mechanism may comprise a guiding device configured to at least partially receive and support the pushing member pivot portion and to translationally move the pushing member in accordance with the driven translational movement by the actuation mechanism.

Accordingly, the pushing member is translationally moved in the direction of the first longitudinal axis by the guiding device at least partially receiving and supporting the pushing member pivot portion to allow the tilting movement of the pushing member. For example, the guiding device may be of an annular shape arranged around the spindle and provides a contact surface for or is operatively connected to the spindle nut to be axially moved along the spindle in correspondence with a respective axial movement of the spindle nut. In other words, the spindle nut may not have to be configured to at least partially receive and support the pushing member pivot potion and a respective translational movement since the guiding device may be easily adapted to both, the pushing member and the spindle nut, similar to an adapter.

The guiding device may comprise at least one axial bearing arranged at a radial outer surface of the guiding device and configured for a guided axial movement of the guiding device with respect to the first longitudinal axis.

Due to a braking operation with the pushing member being in engagement with the brake actuator, a force is applied on the pushing member and therefore other subsequent components operatively connected thereto. In particular, since the pushing member is tilted in engagement with the brake actuator by the brake actuator being moved on a curved trajectory, respective forces or force components, respectively, may act on the pushing member and, for example, the guiding device. Further, the actuation of a brake by the brake actuator may cause respective reaction forces. Specifically, axial forces may therefore occur. Accordingly, the at least one axial bearing arranged at a radial outer surface, i.e. extending at least partially around an outer radial circumference, of the guiding device may absorb axial forces while guiding the axial movement of the guiding device. The at least one axial bearing may therefore be supported radially inside a housing at least partially accommodating the spindle. Due to the force absorption by the at least one axial bearing, axial forces may not have sufficient influence to cause deformations or other damages on the spindle. Accordingly, the spindle design may be optimized without taking care about potential axial forces transferred via the pushing member. Further, the axial bearing or another bearing may also be provided with respect to radial forces.

The electro-mechanical actuator assembly is not limited to the use of concrete axial bearings. Here, any bearing capable of supporting axial forces may be understood as axial bearing. However, concrete axial bearings may be advantageous to increase the capability of a respective support.

The pushing member may comprise a pushing member body with one end comprising the pushing member pivot portion and an opposed end comprising a pushing member head, preferably an exchangeable and/or at least partially spherical pushing member head, configured to engage with a brake actuator for a respective actuation of the brake actuator.

Accordingly, the pushing member extends along a pushing member longitudinal axis from the one end comprising the pushing member pivot portion to the other end comprising the pushing member head. For example, the pushing member longitudinal axis may be coaxially with the first longitudinal axis, and the pushing member body extends at least partially circumferentially around the spindle. The pushing member pivot portion may therefore comprise an opening to receive the spindle. Further, the pushing member head may be at least partially of a spherical shape, e.g. a positive hemisphere configured to be received by a corresponding negative hemisphere portion of the brake actuator to receive the pushing member head for engagement. Due to the spherical interface the contact surfaces of the positive hemispherical pushing member head and the negative hemispherical portion of the brake actuator may slide on each other during the movement along the curved trajectory without blocking such movement. However, the pushing member head is not restricted to a hemispherical shape and may provide another shape in accordance with the receiving portion of the brake actuator for an engagement with the pushing member head. Accordingly, it may be advantageous to allow the pushing member head to be exchanged to adapt the pushing member head with respect to different shapes and/or dimensions.

The pushing member pivot portion may comprise at least one pushing member pivot configured as a cylinder portion and/or a spherical portion.

For example, the pushing member pivot formed as a cylinder portion may be received in a corresponding cylinder support allowing the pushing member to rotate about the cylinder axis. The cylinder portion may be formed by a cylinder or at least a section of a cylinder sufficient to allow a predetermined tilting movement of the pushing member. The at least one cylinder portion may extend in the radial direction outward from the pushing member pivot portion with respect to the pushing member longitudinal axis. Preferably, the pushing member pivot portion comprises at least two pushing member pivots as cylinder portions evenly distributed along the radial surface of the pushing member pivot portion with respect to the pushing member longitudinal axis. Due to the at least two pushing member pivots as cylinder portions, the pushing member may be more stably supported.

Alternatively or in addition, the pushing member pivot may comprise a spherical portion forming a ball joint or at least a ball joint section. Accordingly, the spherical portion may only be partially spherical. Due to the ball joint or ball joint section, respectively, the degrees of freedom for a tilting movement may be increased. In particular, the pushing member may thereby be rotatable in any direction as long as not interfering with other components. The spherical portion may be formed with the pushing member longitudinal axis as symmetry axis.

The guiding device as previously described and/or the spindle nut as previously described may be configured to receive and support the at least one pushing member pivot for the tilting movement of the pushing member.

Accordingly, the guiding device and/or the spindle nut may comprise at least one pushing member pivot receiving portion, such as a recess or another corresponding contour, to receive and support the at least one pushing member pivot.

The guiding device may comprise a first guiding device member and a second guiding device member, wherein the first guiding device member and the second guiding device member are connectable to each other to support the at least one pushing member pivot for the tilting movement of the pushing member.

Accordingly, the pushing member receiving portion may be formed by connecting the first guiding device member and the second guiding device member. For example, the second guiding device member may comprise a cylindrical pin extending radial outward with respect to the pushing member longitudinal axis and the pushing member pivot is formed as a half-cylindrical arc with the inner contour of the arc corresponding to the outer contour of the cylindrical pin. The half-cylindrical arc is placed on the cylindrical pin, and the first guiding member is connected to the second guiding device member. The first guiding device member may comprise at least one first guiding device member recess in the outer circumference extending in the axial direction, wherein a closed end of the first guiding device member recess provides a contour corresponding to the outer contour of the half-cylindrical arc. The first and second guiding device members are configured and connected such that the half-cylindrical arc of the pushing member pivot is sandwiched between the cylindrical pin of the second guiding device member and the closed end of the first guiding device member. This allows a simplified assembling. Further, splitting the guiding device into at least the first guiding device member and the second guiding device member may also allow an exchange of the pushing member and/or the adaption to different pushing members.

Alternatively or in addition, the pushing member pivot is held in the pushing member receiving portion of one of the first and second guiding device members by connecting the other one of the first and second guiding device members to the one of the first and second guiding device members.

The electro-mechanical actuator assembly may further comprise at least one control device, preferably at least one electronic control unit. The control device may be the control device to control the motor as previously addressed but may also be a separate control device.

The driving device shaft and the spindle may extend substantially in one plane, and the at least one control device, preferably at least one electronic control device is arranged laterally to the plane and operatively connected to the driving device and/or the locking unit as previously described.

Accordingly, the control device is placed sidewise on the electro-mechanical actuator assembly. This allows the installation space to be further reduced in the direction of the first longitudinal axis.

The electro-mechanical actuator assembly may comprise at least two control devices arranged on opposite sides of the plane.

For example, the control devices may thereby form a control unit spilt in two parts. The control devices may be arranged that the electro-mechanical actuator assembly remains quasi-symmetric. Preferably the symmetry plane of the arrangement of the control devices corresponds to a brake caliper symmetry plane. The brake caliper symmetry plane is a symmetry plane substantially perpendicular to plane in which the braking surfaces of the brake caliper extend or a braking plane, respectively.

Accordingly, in the event of any failure of one of the at least two control devices, a redundancy to provide respective back-up functionalities may be easier implemented by separating types of functionalities to be assigned to one of the control devices or the other.

In some embodiments, the electro-mechanical actuator assembly further comprises a control device connected to or comprising the force determination unit and configured to provide a closed-loop control of the actuating force based on at least one of the acquired force signal, the estimated force signal, and the force feedback signal.

The control device may be the previously addressed control device comprising the motor current sensor or the electronic control unit comprising the ECU temperature sensor. However, the control device connected to or comprising the force determination unit and configured to provide a closed-loop control of the actuating force may also be an additional control device.

In some embodiments, the force feedback unit is configured to determine a fault of the force sensor by not receiving a force sensor signal or by receiving an implausible force sensor signal, and to transmit an error signal directly or indirectly to the control device, wherein the control device is configured to adapt the control of the actuating force upon receipt of the error signal.

For example, the control may adapt the actuating force upon receipt of the error signal by setting actuating force parameters within a safe range. Further, the control device may control the actuating force and/or other driving and brake operations in a degraded operating mode to allow only predetermined safe operating procedures. Such degraded operating mode may also result in limited maximum driving speeds of a respective vehicle or the like.

Any features or functionalities relating to the force determination unit with respect to the electro-mechanical actuator assembly are also applicable to the electro-mechanical actuator assembly. In turn, any features or functionalities relating to the electro-mechanical actuator assembly described with respect to the force determination unit are also applicable to the force determination unit.

In a further aspect, the present invention relates to a brake assembly for a vehicle. The brake assembly comprises at least one electro-mechanical actuator assembly as previously described, and at least one brake actuator configured to actuate or release a brake upon being actuated by the electro-mechanical actuator assembly.

As previously described, the at least one brake actuator may be a brake lever to pivot about a pivot inclined, preferably substantially perpendicular, to the first longitudinal axis.

The brake assembly may further comprise a brake caliper actuatable by the at least one brake actuator, wherein the at least one brake caliper provides a braking plane extending in a direction substantially perpendicular to a braking movement, and wherein the at least one electro-mechanical actuator assembly is arranged with the first longitudinal axis substantially perpendicular to the braking plane, preferably in the brake caliper symmetry plane, with the at least one brake actuator disposed between the at least one electro-mechanical actuator assembly and the brake caliper. The braking plane corresponds to the plane in which the braking surfaces of the brake caliper extend.

Any features or functionalities relating to the force determination unit or the electro-mechanical actuator assembly, respectively, with respect to the brake assembly are also applicable to the brake assembly. In turn, any features or functionalities relating to the brake assembly described with respect to the force determination unit or the electro-mechanical actuator assembly, respectively, are also applicable to the force determination unit or the electro-mechanical actuator assembly, respectively.

In a further aspect, the present invention relates to a vehicle comprising at least one electro-mechanical actuator assembly as previously described and/or a brake assembly as previously described, wherein the vehicle is preferably a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Any features or functionalities relating to the force determination unit, the electro-mechanical actuator assembly or the brake assembly, respectively, with respect to the vehicle are also applicable to the vehicle. In turn, any features or functionalities relating to the vehicle described with respect to the force determination unit, the electro-mechanical actuator assembly or the brake assembly, respectively, are also applicable to the force determination unit, the electro-mechanical actuator assembly or the brake assembly, respectively.

In a further aspect, the present invention relates to a method for determining a force feedback representative of an actuating force of a brake actuator. The method comprises the steps of:
acquiring an acquired force signal as a signal representing a measured actuating force,
estimating an estimated actuating force signal representing an estimated actuating force, and
generating a force feedback signal representing the force feedback based on at least one of the acquired force signal and the estimated force signal.

In accordance with the force determination unit described previously, the force feedback signal may be generated by at least one of the acquired force signal and the estimated force signal in terms of redundancy. However, the force feedback signal may also be generated based on the acquired force signal and the estimated force signal such as by calculating an average thereof. Generation of the force feedback signal may also comprise filtering and/or noise reduction or any other processing as previously described with respect to the force determination unit.

In some embodiments, the force feedback signal is generated based on selecting the acquired force signal or the estimated force signal.

Accordingly, as already previously described with respect to the force feedback unit, the selection of the acquired force signal or the estimated force signal may be based on prioritizing one of the acquired force signal and the estimated force signal as basis for the force feedback signal, wherein the non-prioritized one of the acquired force signal and the estimated force signal is only used as basis for the force feedback signal, if the prioritized one of the acquired force signal and the estimated force signal is not received or implausible.

Any features or functionalities relating to the force determination unit, the electro-mechanical actuator assembly, the brake assembly or the vehicle, respectively, with respect to the method are also applicable to the method. In turn, any features or functionalities relating to the method described with respect to the force determination unit, the electro-mechanical actuator assembly, the brake assembly or the vehicle, respectively, are also applicable to the force determination unit, the electro-mechanical actuator assembly, the brake assembly or the vehicle, respectively.

In a further aspect, the present invention relates to a computer program product comprising instructions which, when the program is executed by a computer, cause the computer to carry out the method as previously described.

The computer may be a control device comprised by or connected to the force determination unit.

In a further aspect, the present invention relates to a computer-readable storage medium comprising instructions which, when executed by a computer, cause the computer to carry out the method as previously described.

Further advantages, aspects and details of the invention are subject to the claims, the following description of exemplary embodiments applying the principles of the invention, and the respective exemplary drawings.
Fig. 1 is a schematic cross-sectional representation of a brake assembly the present invention is applicable to;
Fig. 2 is another schematic representation in another perspective of the brake assembly of Fig. 1;
Fig. 3 is a schematic representation of an exemplary control device according to the present invention; and
Fig. 4 is a schematic representation of a force determination unit according to an exemplary embodiment of the present invention.

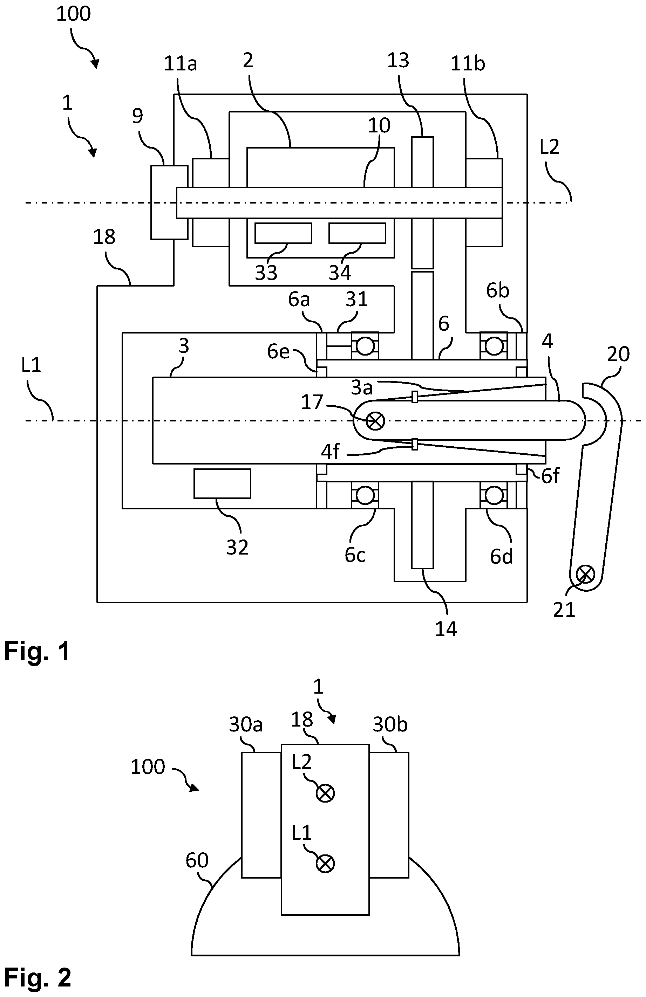

Fig. 1 is a schematic cross-sectional representation of a brake assembly 100 the present invention is applicable to. The brake assembly 100 comprises an electro-mechanical actuator assembly 1.

The electro-mechanical actuator assembly 1 comprises a spindle 3 and a spindle nut 6 configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3. Here, the spindle nut 6 is driven by an electric motor 2 as driving device comprising a motor shaft 10 as driving device shaft. The motor shaft 10 extends in a direction along a second longitudinal axis L2. The first longitudinal axis L1 is parallel to the second longitudinal axis L2. Further, the motor shaft 10 and the spindle 3 respectively arranged in parallel to each other are positioned such that the shorter motor driving shaft 10 does not extend with one end beyond the spindle 3 in at least one relative position to achieve a compact design in the direction of the first longitudinal axis L1 or the second longitudinal axis L2, respectively. In principle, for a compact design, the motor shaft 10 and the spindle 3 are preferably arranged to require minimum space in the direction of the first longitudinal axis L1 or the second longitudinal axis L2, respectively. To drive the spindle nut 6 by the electric motor 2, the motor shaft 10 comprises a drive gear 13 extending radially with respect to the second longitudinal axis L2, and the spindle nut 6 comprises a driven gear 14 extending radially with respect to the first longitudinal axis L1. The drive gear 13 and the driven gear 14 are positioned along the motor shaft 10 and the spindle nut 6, respectively, such that they are in engagement with each other to form a gear stage. In the exemplary embodiment, the gear stage is configured to convert the rotational speed of the motor shaft 10 in a lower rotational speed of the spindle nut 6.

The electric motor 2 and the motor shaft 10 are accommodated in a housing 18. The motor shaft 10 is rotationally supported in the housing 18 by motor shaft bearing 11a, 11b, each of which is disposed on one end of the motor shaft 10. Further, the motor shaft 10 can be locked against a rotational movement by a bi-stable brake 9 as locking unit.

The spindle nut 6 is also accommodated in the housing 18, and rotationally supported by a spindle nut fixing bearing 6c and a spindle nut loose bearing 6d. The spindle nut fixing bearing 6c is configured to allow the spindle nut 6 to rotate but prevent the spindle nut 6 from an axial movement with respect to the first longitudinal axis L1. In the exemplary embodiment, the spindle nut loose bearing 6d provides a further support to rotate the spindle nut 6 in a stable position.

Further, two radial seals 7a, 7b are arranged circumferentially around the spindle 6. The radial seals 6a, 6b are arranged at opposed ends of the spindle nut 6 in the direction of the first longitudinal axis L1 with the spindle nut fixing bearing 6c, the spindle nut loose bearing 6d, the driven gear 14, the drive gear 13, the motor shaft 10 and the electric motor 2 being sealed in a space of the housing therebetween.

The spindle 3 is configured to be axially moved by the spindle nut 6 with respect to the first longitudinal axis L1. To prevent the spindle 3 from a rotational movement, the spindle nut comprises support pins (not shown) extending radially outward in opposing directions from the spindle 3 with respect to the first longitudinal axis L1. The support pins extend into respective guiding grooves (not shown) to guide the support pins and thereby the spindle 3 during an axial movement in the axial movement direction, while preventing the spindle 3 to rotate. Two wipers 6e, 6f are arranged at opposed ends of the spindle nut 3 in the direction of the first longitudinal axis L1. Each of the two wipers 6e, 6f extends circumferentially between an inner diameter of the spindle nut 6 and an outer diameter of the spindle 3.

The spindle 3 comprises a spindle recess 3a in a conical shape. However, in other embodiments, the spindle recess 3a may be of a different shape, e.g. in a shape of a triangular slit, or a rectangular volume. In the exemplary embodiment, the conical shape of the spindle recess 3a provides an opening at the end of the spindle 3 facing toward the brake lever 20, while the spindle recess 3a is tapered toward the closed end portion facing away from the brake lever 20 in the direction of the first longitudinal axis L1. A pushing member 4 is partially received within the spindle recess 3a, and affixed thereto by a fixing member 4f, here, a fixing O-ring. The pushing member 4 substantially extends in the direction of the first longitudinal axis L1 and is tiltable about a pivot axis 17, which extends substantially perpendicular to the first longitudinal axis L1 and in parallel to a pivot axis 21 of the brake lever 20. The pushing member 4 provides a spherically shaped end portion at the end facing away from the brake lever 20. The spherically shaped end portion corresponds to the contour of the closed end portion of the spindle recess 3a. Accordingly, the pushing member 4 is arranged within the spindle recess 3a, such that the pushing member 4 is allowed to tilt about the pivot axis 17, wherein the spherically shaped end portion of the pushing member 4 slides along the corresponding contour of the closed end portion of the spindle recess 3a in a guided manner. The tilting movement of the pushing member 4 or the deflection from the first longitudinal axis L1 is restricted by the conical shaped circumferential wall of the spindle recess 3a extending from the closed end portion to the opening of the spindle recess 3a.

For a braking operation, the electric motor 2 drives the spindle nut 6 via the motor shaft 10 and the gear stage 13, 14 to rotate. Accordingly, the spindle 3 is translationally moved in the direction of the first longitudinal axis L1 toward the brake lever 20. Accordingly, the pushing member 4 operatively coupled to the spindle 3 is moved toward the brake lever 20. The end of the pushing member 4 facing the brake lever 20 engages with the brake lever 20, which is thereby rotated about the pivot axis 21 upon further movement of the pushing member 4 in the direction of the first longitudinal axis L1. The end of the pushing member 4 for engagement with the brake lever 20 provides a spherically shaped portion corresponding to a spherically shaped concave portion of the brake lever 20. Due to the brake lever 20 pivoting about the pivot axis 21 in response of being driven by the pushing member 4, the spherically shaped concave portion of the brake lever 20 follows a curved trajectory. Since the pushing member 4 is tiltable about the pivot axis 17, the pushing member is allowed to follow the curved trajectory of the braking lever 20.

To reduce bending forces on the spindle 3, which may occur during a braking operation due to the engagement of the pushing member 4 with the brake lever 20 and respective reaction forces, the pushing member 4 and the pivot axis 17 of the pushing member 4, respectively, extends deeply into the spindle 3 in accordance with a respective length of the spindle recess 3a in the direction of the first longitudinal axis L1. Further, to provide sufficient support of the spindle 3 with respect to occurring bending forces, the closed end portion of the spindle recess 3a and the pivot axis 17 of the pushing member 4, respectively, are located, such there are moved between the spindle nut fixed bearing 6c and the spindle nut loose bearing 6d during a braking operation.

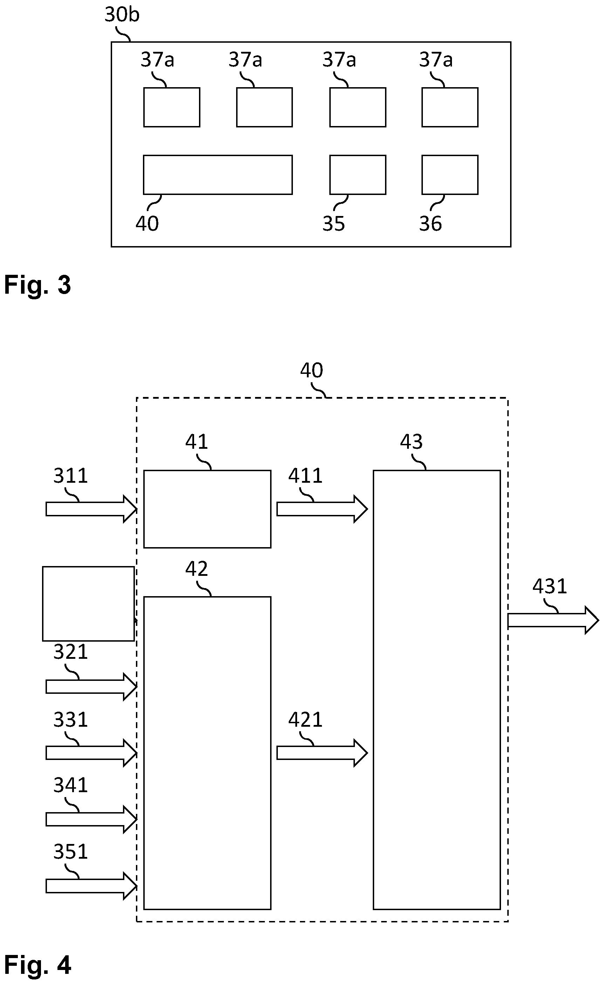

The electro-mechanical actuator assembly 1 further comprises a force sensor 31, a stroke sensor 32, a motor position sensor 33 and a motor temperature sensor 34. The force sensor 31 is configured to measure the actuator force and is arranged between the spindle nut fixing bearing 6c and the radial seal 6a. The force sensor 31 is configured to transmit the measured force as a force sensor signal 311 (Fig. 4). The stroke sensor 32 is arranged in the vicinity of the spindle 3 to measure a stroke of the spindle 3. The stroke sensor 32 is configured to transmit the measured stroke as a strike sensor signal 321 (Fig. 4). The motor position sensor 33 and the motor temperature sensor 32 are arranged within the electric motor to measure a motor position and motor temperature, respectively. The motor position sensor 33 is configured to transmit the measured motor position as a motor position sensor signal 331 (Fig. 4). The motor temperature sensor 34 is configured to transmit the measured motor temperature as a motor temperature sensor signal 341 (Fig. 4).

Fig. 2 shows another schematic representation in another perspective of the brake assembly 100 of Fig. 1.

Besides the electro-mechanical actuator assembly 1 and the brake lever 20, which is not visible in the given perspective, already previously described, the brake assembly 100 further comprises a brake caliper 60. In the exemplary embodiment, the brake caliper 60 is a floating caliper configured to be actuated by the brake lever 20 arranged between the electro-mechanical actuator assembly 1 and the brake caliper 60. The braking surfaces of the brake caliper 60 extend in a plane substantially perpendicular to the first longitudinal axis L1. Further, in the exemplary embodiment, the electro-mechanical actuator assembly 1 comprises two electronic control units 30a, 30b as control devices. The electronic control units 30a, 30b are attached to the housing 18 on opposed lateral sides of the housing 18. The lateral sides of the housing extend in planes laterally to a plane comprising the first longitudinal axis L1 and the second longitudinal axis L2. One electronic control unit 30a is a control unit configured to control operatively connected components of the electro-mechanical actuator assembly 1, and the other electronic control unit 30b is a power control unit configured to control a power supply to operatively connected components of the electro-mechanical actuator assembly 1. In the brake assembly 100 the electro-mechanical actuator assembly 1 is arranged such that the first longitudinal axis L1 and the second longitudinal axis L2 are oriented in a vertical plane.

Fig. 3 shows a schematic representation of the exemplary control device 30b comprising a force determination unit 40 according to the present invention. The control device 30b is an electronic control unit and configured to control a power supply to operatively connected components of the electro-mechanical actuator assembly 1 as previously described. The control device 30b further comprises different ECU members 37a for the control of the power supply, a motor current sensor 35 and an ECU temperature sensor 36.

Fig. 4 shows a schematic representation of the force determination unit 40 according to an exemplary embodiment of the present invention. The force determination unit 40 comprises a force acquisition unit 41, a force estimation unit 42 and a force feedback unit 43.

The force acquisition unit 41 receives the force sensor signals 311 and applies a noise reduction procedure on the force sensor signals 311 to provide acquired force signals 411. In parallel, the force estimation unit 42 receives stroke sensor signals 321, motor position sensor signals 331, motor temperature position signals 341, and motor current sensor signals 351 from the motor current sensor 35. The force estimation unit 42 calculates an actual motor current based on the actual motor position sensor signal 331, the actual motor temperature position signal 341, and the actual motor current sensor signal 351, and provides an estimated force signal 421 based on a nonlinear function between the calculated actual motor current and the actual stroke sensor signal 321. The acquired force signals 411 and the estimated force signals 421 are transferred to the force feedback unit 43. The force feedback unit 43 determines whether an actual acquired force signal 411 is available. If not, the force feedback unit 43 determines the actual estimated force signal 421 as actual force feedback signal 431. If the actual acquired force signal 411 is available, the force feedback unit 43 further determines whether the actual acquired force signal 411 is plausible by comparing the actual acquired force signal 411 with the actual estimated force signal 421. If the difference between the actual acquired force signal 411 and the actual estimated force signal 421 is within a predetermined range, the actual acquired force signal 411 is determined as plausible. Accordingly, the force feedback unit 43 determines the actual acquired force signal 411 as actual feedback signal 431. However, if the force feedback unit 43 determines the actual acquired force signal 411 as implausible, the force feedback unit 43 determines the actual estimated force signal 421 as actual force feedback signal 431. Actual force feedback signals 431 are transmitted to the control device 30a as an example of a control device comprising a closed-loop force control.

The invention has been described with respect to an exemplary embodiments. However, the invention is not limited to the exemplary embodiments

### LIST OF REFERENCE SIGNS

- 1: electro-mechanical actuator assembly
- 2: electric motor (driving device)
- 3: spindle
- 3a: spindle recess
- 4: pushing member
- 6: spindle nut
- 6a, 6b: radial seal
- 6c: spindle nut fixing bearing
- 6d: spindle nut loose bearing
- 6e, 6f: wiper
- 9: bi-stable brake (locking unit)
- 10: motor shaft (rotor)
- 11a, 11b: motor shaft bearing
- 13: drive gear
- 14: driven gear
- 17: pivot axis
- 18: housing
- 20: brake lever (brake actuator)
- 21: pivot axis
- 30a, 30b: electronic control unit (control device)
- 31: force sensor
- 32: stroke sensor
- 33: motor position sensor
- 34: motor temperature sensor
- 35: motor current sensor
- 36: ECU temperature sensor
- 37a: ECU member
- 40: force determination unit
- 41: force acquisition unit
- 42: force estimation unit
- 43: force feedback unit
- 60: brake caliper
- 100: brake assembly
- 311: force sensor signal
- 321: stroke sensor signal
- 331: motor position sensor signal
- 341: motor temperature sensor signal
- 351: motor current sensor signal
- 411: acquired force signal
- 421: estimated force signal
- 431: force feedback signal
- L1: first longitudinal axis
- L2: second longitudinal axis

## Claims

1. Force determination unit (40) for determining a force feedback representative of an actuating force of a brake actuator (20), comprising:
a force acquisition unit (41) configured to provide an acquired force signal (411) as a signal representing a measured actuating force, and
a force estimation unit (42) configured to provide an estimated force signal (421) as a signal representing an estimated actuating force.

2. Force determination unit (40) according to claim 1, wherein the force determination unit (40) further comprises a force feedback unit (43) configured to receive the acquired force signal (411) and the estimated force signal (421) to determine a force feedback signal (431) as a signal representing the force feedback, and wherein
the force feedback unit (43) is further configured to determine the force feedback signal (431) by selecting the acquired force signal (411) as force feedback signal (431), if no estimated force signal (421) is received or the acquired force signal (421) is plausible, and by selecting the estimated force signal (421) as force feedback signal (431), if no acquired force signal (411) is received or the acquired force signal (411) is implausible.

3. Force determination unit (40) according to claim 2, wherein the force feedback unit (43) is configured to determine the acquired force signal (411) as plausible, if a difference between the acquired force signal (411) and the estimated force signal (421) is within a predetermined range.

4. Force determination unit (40) according to claim 3, wherein the force feedback unit (43) is configured to adapt the predetermined range dependent on a brake procedure.

5. Force determination unit (40) according to any one of the preceding claims, wherein the force estimation unit (42) is configured to estimate the actuating force based on at least one of a stroke sensor signal (321) representing a stroke or position of an actuating member (3, 6) of an electro-mechanical actuator assembly (1), a motor position sensor signal (331) representing a position of a rotor (10) of a driving device (2) of the electro-mechanical actuator assembly (1), a motor temperature sensor signal (341) representing the temperature of the driving device (2) of the electro-mechanical actuator assembly (1), a motor current sensor signal (351) representing a motor current of the driving device (2) of the electro-mechanical actuator assembly (1), and a control unit temperature signal representing a temperature of a control device (30a, 30b) of the electro-mechanical actuator assembly (1).

6. Force determination unit (40) according to claim 5, wherein the force estimation unit (42) is configured to calculating the motor torque by at least one of the motor position sensor signal (331), the motor temperature sensor signal (341), and the motor current sensor signal (351), and to estimate the actuator force as by the calculated motor torque in dependence of the stroke sensor signal (321), preferably be a nonlinear function between the stroke or position of the actuating member (3, 6) represented by the stroke sensor signal (321) and the calculated motor torque as input.

7. Electro-mechanical actuator assembly (1) for actuating a brake actuator (20) , comprising:
an actuating member (3, 6) for actuating the brake actuator (20),
a driving device (2) to move the actuating member (3, 6) for actuating the brake actuator (20), and
a force determination unit (40) according to any one of the preceding claims, wherein
the electro-mechanical actuator assembly (1) further comprises at least one of
a force sensor (31) connected at least to the force acquisition unit (41) to supply a force sensor signal (311) as input for providing an acquired force signal (411),
a stroke sensor (32) connected at least to the force estimation unit (42) to supply a stroke sensor signal (321) as input for providing an estimated force signal (411),
a motor position sensor (33) connected at least to the force estimation unit (42) to supply a motor position sensor signal (331) as input for providing an estimated force signal (411),
a motor temperature sensor (34) connected at least to the force estimation unit (42) to supply a motor temperature sensor signal (341) as input for providing an estimated force signal (411),
a motor current sensor (35) connected at least to the force estimation unit (42) to supply a motor current sensor signal (351) as input for providing an estimated force signal (411), and
an ECU temperature sensor (36) connected at least to the force estimation unit (42) to supply a ECU temperature sensor signal (361) as input for providing an estimated force signal (411).

8. Electro-mechanical actuator assembly (1) according to claim 7, wherein the electro-mechanical actuator assembly (1) further comprises a control device (30a, 30b) connected to or comprising the force determination unit (40) and configured to provide a closed-loop control of the actuating force based on at least one of the acquired force signal (411), the estimated force signal (421), and the force feedback signal (433).

9. Electro-mechanical actuator assembly (1) according to claim 8, wherein the force feedback unit (43) is configured to determine a fault of the force sensor (31) by not receiving a force sensor signal (311) or by receiving an implausible force sensor signal (311), and to transmit an error signal directly or indirectly to the control device (30a, 30b), wherein the control device is configured to adapt the control of the actuating force upon receipt of the error signal.

10. Brake assembly (100) for a vehicle, comprising
at least one electro-mechanical actuator assembly (1) according to any one of the claims 7 to 9, and
at least one brake actuator (20) configured to actuate or release a brake upon being actuated by the electro-mechanical actuator assembly (1).

11. Vehicle comprising at least one electro-mechanical actuator assembly (1) according to any one of the claims 7 to 9 and/or a brake assembly (100) according to claim 10, wherein the vehicle is preferably a commercial vehicle and/or an electrically powered or hybrid vehicle.

12. Method for determining a force feedback representative of an actuating force of a brake actuator (20), comprising the steps of:
acquiring an acquired force signal (411) as a signal representing a measured actuating force,
estimating an estimated actuating force signal (421) representing an estimated actuating force, and
generating a force feedback signal (431) representing the force feedback based on at least one of the acquired force signal (411) and the estimated force signal (421).

13. Method according to claim 12, wherein the force feedback signal (431) is generated based on selecting the acquired force signal (411) or the estimated force signal (421).

14. Computer program product comprising instructions which, when the program is executed by a computer, cause the computer to carry out the method according to claim 12 or 13.

15. Computer-readable storage medium comprising instructions which, when executed by a computer, cause the computer to carry out the method according to claim 12 or 13.
